# EUROPEAN PATENT APPLICATION

(11) **EP 4 830 800 A2**
(43) Date of publication of application: **28.10.2026**
(21) Application number: 24905216.8
(22) Date of filing: 16.12.2024
(51) Int. Cl.: A63F 3/06, G06Q 50/34, G06F 17/18, G06F 17/00

(54) **METHOD FOR IMPLEMENTING ADDITIONAL BETS IN A LOTTERY-TYPE GAME**

(30) Priority: 20.12.2023 BR 102023027031; 06.12.2024 BR 102024025534
(71) Applicant: Rossi, Antonio, 95032-300 Caxias do Sul (BR)
(72) Inventor: Rossi, Antonio, 95032-300 Caxias do Sul (BR)
(74) Representative: Pereira Garcia, João Luís
(86) International application number: PCT/BR2024/050586
(87) International publication number: WO 2025/129308

(57) **Abstract**

**METHOD FOR IMPLEMENTING ADDITIONAL BETS IN A LOTTERY-STYLE GAME** refers to a method for implementing bets that will be added to an existing lottery-style game, known as the base game, which provides for additional, alternative, or complementary ways to participate. The method is implemented via a computer system, preferably an online platform, that connects various agents, including: players, betting houses, and official gaming regulatory bodies, including those overseeing the base game. By verifying predefined parameters, the method determines one or more winners based on bets added to the base game, which encompasses various ways to participate through numerical bets.

## Description

### Subject:

This Patent relates to a method for implementing bets to be added to an existing lottery-style game, referred to as the base game, which provides for additional, alternative, or complementary ways to participate. The method is implemented by a computer system, preferably an online platform, that connects various agents, including: players, betting houses, and official gaming regulatory bodies, including the base game. By verifying predefined parameters, the method results in the determination of one or more winners based on bets added to the base game, which encompasses various ways to participate through numerical bets.

### State of the Art:

Lottery games have long been known in the art, with various rules and parameters, where, in general, a bet is placed on a set of numbers within an initially defined range, and a specific number of numbers is drawn. Winning combinations, whether complete or partial, are awarded prizes, depending on the general rules of each game. In particular, there is the sports lottery, which generally involves a soccer championship whose outcome depends on the results of the matches played in that championship.

With regard to prior art, a large number of documents are known, all of which describe methods implemented by computer systems, most of which are responsible for compiling bets, identifying which of the bets placed match the drawn numbers, and distributing the winnings. Among these documents, we can cite CN114595057A, published on June 7, 2022, which discloses a method and system for managing the inventory of virtual prizes on a lottery drawing platform. Similarly, document CN116308509A, published on June 23, 2023, describes a method for instant lottery draws comprising the following steps: determining the number N of lottery draw windows; uniformly distributing prizes from the current prize pool to the unfinished draw windows in real time; and determining the probability of winning the next lottery draw window based on the fluctuation in the number of lottery draw events from the previous k consecutive draw windows.

Other documents aim to establish an expected number of winners as well as to suggest and/or recommend promising bets to players using statistical methods, such as KR20200127280A published on November 11, 2020, and KR102072552B1 published on February 3, 2020, respectively.

Document BR102022005629-3, filed on March 24, 2022, by the same applicant, relates to a method for conducting a lottery-type game that provides for two ways to participate based on a single bet, that is, with a single selection of 15 numbers ranging from 01 to 25. The first way involves the fact that, among the 15 numbers chosen, the bettor can match 11, 12, 13, 14, or 15 numbers. The second way involves the bettor winning a second prize if, among these remaining 10 numbers, there are 1, 2, 3, or 4 of the 15 drawn numbers, or none (zero) of the drawn numbers.

Therefore, based on the research conducted, no documents were found that describe methods involving two types of bets placed in relation to a base game-that is, using a draw from a base game to facilitate such additional bets-a fact that distinguishes the present method from those known in the prior art.

### Inventive Concept:

The present Method for Implementing Additional Bets on a Lottery-Type Game is based on a pre-existing base game in which a set of N numbers is drawn, or on a sports lottery-type game, in which no draw takes place, since only the results of matches played in a specific sports league-generally soccer-are considered.

Thus, this method for placing additional bets based on a base game was developed to allow players to participate in the game in the following additional scenarios:
- Scenario 1: Adjacent numbers - the player selects a set of N numbers to participate in the base game, such as a standard lottery. For the bettor to receive a prize in this additional bet, all selected numbers must be adjacent to the numbers drawn in the base game, considering their numerical sequence. For example: if the number 8 was drawn in the base game, in this additional bet, a bet on the numbers 7 or 9 would be considered a win.
- 2nd Situation: Vertical Adjacency - the player selects a set of N numbers to participate in the base game, such as a standard lottery. For the bettor to win a prize in this additional bet, all selected numbers must be vertically adjacent to the numbers drawn in the base game, considering the position of the numbers on the base game's betting slip. For example: if the number 8 was drawn in the base game, in this additional bet, betting on the numbers immediately above or immediately below the number 8 on the base game's betting slip would be considered a win.
- 3rd scenario: total neighbors - the player selects a set of N numbers, where N may be the same number of numbers used in the base game, such as a standard lottery. For the bettor to win a prize in this additional bet, all selected numbers must be total neighbors of the numbers drawn in the base game, taking into account the position of the numbers on the base game's betting slip. For example: if the number 8 was drawn in the base game, in this additional bet, betting on the numbers 7 and 9, as well as the numbers immediately above or immediately below the number 8 on the base game's betting slip, would be considered a win.

Alternatively, the situations described above may consider, in addition to the immediate neighborhood, two or more subsequent neighborhoods. For example, in the case of the lateral neighborhood, if the number 8 was drawn in the base game, the numbers 5, 6, and 7, as well as 9, 10, and 11, would be considered a win if the bet contained any of these numbers. In the case of the vertical and total neighborhoods, in this same example, two or more positions beyond the immediate neighboring position would be considered. Alternatively, the situations described above may consider only subsequent numbers or positions as the immediate neighborhood. For example, if the number 8 was drawn in the base game, only the number 10 could be considered a win, as it is the second subsequent neighbor.

Alternatively, as a possible restriction aimed at reducing the probability of correct matches, the lateral neighborhood described in the first scenario is limited to either the left or right neighborhood. In this case, only numbers positioned to the left or right of the drawn number will be considered correct, which may be the numbers immediately to the left or right of the drawn number or numbers following these.

Alternatively, as a possible restriction aimed at reducing the probability of winning, the vertical neighborhood, as described in the second scenario, is limited to the upper or lower neighborhood. In this case, only numbers positioned above or below the drawn number will be considered winning numbers, which may be the numbers immediately above or below the drawn number or numbers following these.

When the limitations described above apply-regarding adjacent numbers and vertical numbers-for numbers located at the left, right, top, or bottom edges of the card, the number in the position opposite the restricted one is considered a match. For example: suppose the number 20 is drawn and is located at the right edge of the card, where there is no number to its right. If there is a restriction on the right lateral neighbor (where only numbers positioned to the right of the drawn numbers are considered correct), the bet on the number 19, positioned on the opposite side to the number 21, will be considered a correct match.

Thus, the method aims to verify additional bets relative to the base game, where it checks how many numbers bet were considered a win under the above parameters and selects the tiered prize level based on the verification result.

Additional bets may or may not be charged separately, as a single or multiple types of bets, depending on the lottery operator. The lottery operator may also determine whether the additional side, vertical, and total neighborhood bets are mutually exclusive or complementary-that is, whether the bettor must choose between the additional bets or can bet on all formats in a single game. Statistical studies can help define the format in which the game is offered to the public, since by accumulating bets, the bettor has a better chance of winning.

Alternatively, for these bets to be valid, a number X may be designated as an on/off trigger; that is, number X must be among the numbers drawn in the base game for the additional bets to be activated. For example, the game controller determines that these bets will only be valid when the digit 12 is drawn in the base game, acting as an on/off switch. When this digit is not among the drawn numbers, the additional bets will not be valid, even if they have been placed and paid for. This digit may be changed by the game controller periodically, and its use is optional. This chosen number will be called the "on/off number."

The pairing of a number X with a column A-which can be the right, middle, or left column-as an on/off mechanism can also occur in situations where the base game is a sports lottery, functioning in the same way.

In cases where the adjacent number rule described in the second scenario is applied to sports lotteries, the game operator must determine whether the right adjacent number or the left adjacent number will be considered a win for all bets in the middle column.

In all cases of additional bets, only one adjacent number will count for each drawn number. For example, if the number 8 is drawn in the main game, and the additional bet includes the numbers 7 and 9, only one of them will be considered a win under the adjacent number rule.

Thus, the method serves to organize the bets, separating those related to the first and second bets, verify which drawn numbers are in each bet according to the rules of each situation, and determine the prizes for each player, if any, as well as automatically notifying the various agents involved.

### Scope of Application:

This Method for Implementing Additional Bets in a Lottery-Type Game is used as a data processing method for the implementation of lottery-type games.

### Advantages:

The Method for Processing Additional Bets on a Lottery-Style Game offers the following advantages:
- It automatically processes data for additional bets placed by the bettor on top of the base game, all contained on a single ticket;
- It automatically enables or disables additional bets relative to the base game, if an on/off switch is present;
- It interconnects the various agents to enable the simultaneous display of results for both bets;
- It increases the bettor's chances of winning, as additional bets to the base game are possible;
- It provides automatic control over bets and winners.

### Illustrations:

In order to facilitate research and aid in the understanding of this patent, as recommended in the report, and in accordance with a basic and preferred embodiment developed by the applicant, reference is made to the attached illustrations, which form an integral part of and support this descriptive report, wherein:

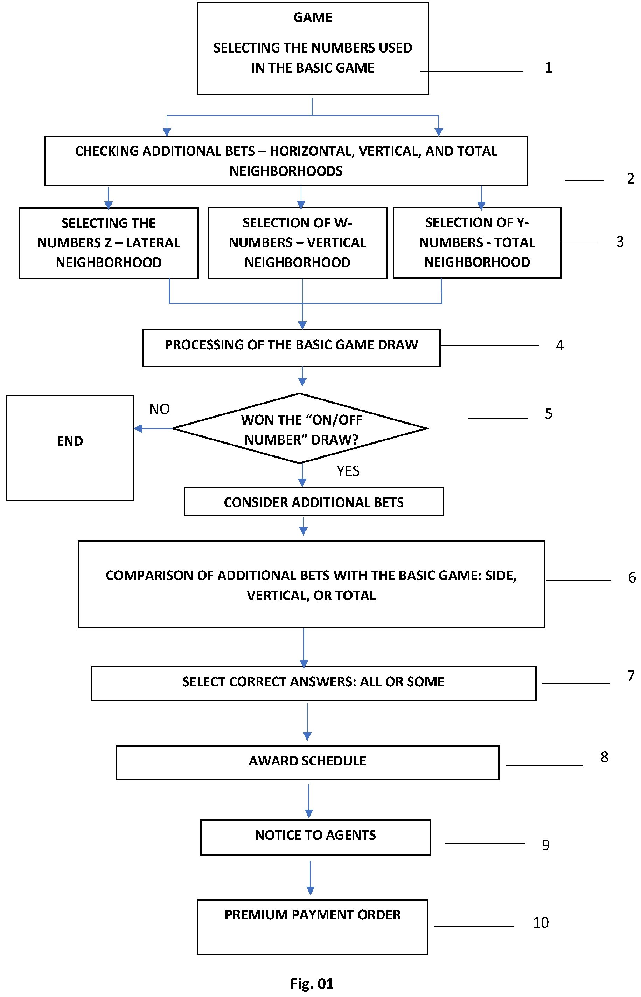

FIG. 01 - presents a basic schematic flowchart of the method.

### Description:

The Method for Implementing Additional Bets on a Lottery-Type Game comprises at least one betting agent, one bet-receiving agent, one game controller, and one base game controller, with additional agents potentially involved depending on the specific case. The base game may be standard lotteries or sports lotteries. Bets using numbers or soccer teams are possible but non-exhaustive examples; symbols, colors, or any combination of these possibilities may also be used. In cases where it is not possible to apply the neighborhood rules due to the position of the numbers or other symbols drawn in the table used in the game, the prize may roll over.

The method is implemented by a computer system, preferably an online platform, that connects various agents, and comprises at least the steps defined below.

In step (1), the bettor places the base bet, either in person at a lottery retailer or via an online platform, where they must select Y numbers from a set of N numbers on the base game ticket and pay the stipulated amount. The game operator must determine which rule or set of rules applies to the game regarding adjacent numbers, in accordance with the possibilities detailed below, defining which adjacent numbers are valid and also the order in which adjacent numbers are checked if there are restrictions.

After selecting the base game, the bettor may choose to participate in all additional bets or only some of them, depending on the controller's specific rules regarding this matter. Thus, in step (2), the method verifies whether all additional bets will be valid for the game, or only some of them; a single amount may be charged for the game as a whole-that is, the additional bets are automatically part of the main game-or a separate amount may be charged for each additional bet.

In step (2), the method also checks for any restrictions regarding lateral and vertical adjacencies, where only one lateral adjacency-either right or left-or only one vertical adjacency-either above or below-is valid for the current game. For example, if it is defined that only the upper vertical neighborhood is valid, the rule may specify that, to close the game, the lower vertical neighborhood may be used as a second option. Similarly, the rule may define that the other neighborhoods may be used to close the game, in a previously established order.

In step (3), the method processes the game data, selects the Y numbers chosen by the bettor, and, using the lateral neighborhood rule, selects the Z numbers that will be part of the first additional bet. For example, if the number 8 is chosen by the bettor, the method selects the numbers 7 and 9 and/or, alternatively, 5, 6, and 7, and 10, 11, and 12 for comparison with numbers drawn in the base game.

Similarly, in step (3), the method processes the game data, selects the N numbers chosen by the bettor, and, using the vertical neighborhood rule, selects the W numbers that will be part of the additional bet. For example, if the number 8 is chosen by the bettor, the method selects the numbers arranged above and below the number 8, taking into account the arrangement of the numbers on the base game card.

Alternatively, in addition to the immediate neighborhood, two or more subsequent neighborhoods may be considered. For example, in this same example, two or more positions beyond the immediate neighboring position would be considered, in the vertical direction. In another alternative mode, it may be defined that the lateral or vertical neighborhood is not immediate, but in subsequent positions; for example, if the number 8 is drawn in the main game, it may be defined that the numbers 6 and 10 are considered neighbors. In this case, if the managing agent chooses the second neighborhood, the game will be governed by the second neighborhood only, whether vertical or lateral. The selected numbers are compared with the numbers drawn in the base game.

Alternatively, the lateral neighborhood may be limited to the left or right neighborhood. In this case, only numbers located to the left or right of the drawn number will be considered matches, which may be the numbers immediately to the left or right of the drawn number or numbers following them. Alternatively, the vertical neighborhood may be limited to the upper or lower neighborhood. In this case, only numbers positioned above or below the drawn number will be considered matches, which may be the numbers immediately above or below the drawn number or numbers following them.

In the same step (3), the method processes the game data, selects the Y numbers chosen by the bettor, and, using the total neighborhood rule, selects the Z numbers that will be part of the additional bet. For example, if the number 8 is chosen by the bettor, the method selects the numbers located before, after, above, and below the number 8, taking into account the arrangement of the numbers on the base game ticket. Alternatively, in addition to the immediate neighborhood, two or more subsequent neighborhoods may be considered. For example, in this same example, two or more positions beyond the immediate neighboring position would be considered, in all directions. The selected numbers are compared with the numbers drawn in the base game.

In cases where the additional bet considers only vertical or lateral adjacency-which may be subject to restrictions, such as left or right lateral adjacency, or adjacency above or below-step (3) involves selecting the numbers that will be considered correct based on these restrictions. For numbers located at the left, right, top, or bottom edges of the card, the number in the position opposite the restriction is considered a match. For example: assuming that the number 20 is drawn and is on the right edge of the ticket, where there is no number to its right. If there is a right-side adjacent number restriction (where only numbers positioned to the right of the drawn numbers are considered matches), a bet on the number 19 will be considered a match.

In step (4), the data on the numbers drawn in the base game are processed; the draw generally takes place in a physical format, supervised by inspectors, and is subsequently entered into the operating system that applies the method. However, the physical draw may be replaced by valid equivalent digital means.

In step (5), the method optionally checks whether the "on/off number" has been drawn. If the "on/off number" has not been drawn, the method checks only the winning numbers for the base game. If the "on/off number" was drawn, the additional bets will be considered for the continuation of the method. This step is optional and may or may not be triggered depending on the controller; that is, in games where no "on/off number" is determined, the method automatically proceeds from step (4) to step (6).

In step (6), the method involves verifying the additional bets for all games by comparing the numbers selected in step (3) with the numbers drawn in the base game. In step (7), the winning combinations are selected and potential winners are identified, taking into account, in one implementation of the method:
- lateral adjacency rule - For the bettor to receive any prize, all selected numbers must be lateral neighbors of the numbers drawn in the base game, considering the selection made in step (3), with possible limitations regarding left or right adjacency;
- vertical adjacency rule - For the bettor to receive any prize, all selected numbers must be vertical neighbors of the numbers drawn in the base game, based on the selection made in step (3), taking into account possible limitations regarding upper or lower adjacency;
- Total Neighborhood Rule - For the bettor to receive any prize, all selected numbers must be total neighbors of the numbers drawn in the base game, taking into account the selection made in step (3).

In step (7), the method may consider only immediate lateral, vertical, or total adjacencies, or it may consider two or more subsequent numbers or positions, depending on the choice of the controlling agent and/or the version of the game offered to the public.

After the winners are selected in step (7), the prizes for the additional bets are staggered and distributed in step (8), and this is communicated to the lottery management agents in step (9). The order of prize payment is carried out by the system in step (10) and is similarly supervised by the agents involved.

In all cases of additional bets, only one neighborhood will be valid for each drawn number, which will be processed in step (6). In rare cases where drawn numbers accumulate such that it is not possible to establish a single neighborhood or all neighborhoods, or where neighborhoods accumulate excessively, the managing agent may determine that the prize rolls over or, alternatively, may award the prize to the entries with the most correct numbers.

In cases where the drawn numbers are sequential, horizontal, or vertical, or where there is a tie for the same adjacent number, the additional adjacency rules will be applied, giving preference to the lowest or highest number among those drawn. For example, if the numbers 1, 3, and 4 are drawn, the number 2 will be considered a lateral neighbor only of the number 1, if the preference is for the lowest drawn number. In the case of vertical adjacency, for example, where the numbers 04, 24, and 34 are drawn, arranged vertically on the betting table, the number 14 will be considered an adjacent number to 04 if the preference is for the lowest drawn number.

In cases where the base game is a sports lottery-in which there is no sequence of numbers, but rather three columns: the left column (Team 1 wins), the middle column (draw), and the right column (Team 2 wins)-additional bets are handled slightly differently. In this case, the bettor will not choose numbers, but will choose, for each line, a column from among the left column (Team 1 wins), the middle column (draw), and the right column (Team 2 wins). Since the results of sports games are considered-and this is not a lottery-it does not make sense to place additional bets based on vertical and total adjacency. For this reason, when the base game is the sports lottery, only the additional bet on lateral adjacency is valid:
- lateral adjacency rule - For the bettor to receive any additional prize, all selected results must be lateral neighbors of the sports game results considered in the base game, based on the selection made in step (3).

In the case of sports lotteries, the game operator must determine whether a right-side adjacent number or a left-side adjacent number will be considered a winning match; this determination may apply to all bets or only to bets in the middle column.

The game operator may choose to award prizes only to those who meet the rules set forth in step (7) for additional bets-that is, where 100% of the chosen numbers are among those selected as winners under the rules for adjacent, vertical, or total matches-or, alternatively, determine that the winning numbers be distributed between the base game bet and the additional bets.

For example, consider a situation in which 10 numbers are drawn in the base game and additional bets are considered, and the bettor may choose up to 15 numbers. The controlling agent may determine that 5 numbers may be matched in the base game and the other 5 numbers may be matched in the additional bets, resulting in multiple matches. In this case, for the side bets, of the 5 matches, 2 numbers may be considered matches under the lateral adjacency rule, 1 number may be considered a match under the vertical adjacency rule, and 2 numbers may be considered matches under the total adjacency rule. In this case, this rule will be verified in steps (6) and (7) of the method.

In cases where three or more numbers are drawn in sequence, the lateral or vertical adjacency is automatically reversed for all numbers between the first and last numbers. For example, if the numbers 13, 14, 15, and 16 are drawn. For numbers 14 and 15, the lateral adjacency automatically becomes vertical adjacency, where the numbers positioned above and below numbers 14 and 15 will be considered, as arranged on the betting slip. In the case of vertical adjacency, for example, if the numbers 04, 24, 34, and 44 are drawn. For numbers 24 and 34, the vertical adjacency automatically becomes lateral adjacency.

The same variation may occur when the base game is a sports lottery, in which some winning combinations may be determined based on direct bets on the base game, while the remaining winning combinations will follow the rules of the lateral neighborhood, taking into account the position of the columns on the betting slip.

If the bettor matches all the numbers or symbols selected by the rules of the side, vertical, or total neighborhood, they will not have matched any numbers or symbols in the base game; that is, they will have a "zero." If the bettor matches a single number in the base game and all other numbers or symbols selected by the rules of the side, vertical, or total neighborhood, they will have a "one." For matches of two or more numbers in the main game, and the rest in the adjacent areas, the same procedure described above applies.

The same procedures for additional bets can be applied to games that include secondary bets using numbers or symbols. For example, in situations where the base game allows for the selection of numbers in a first bet, from among 50 numbers, and also the selection of numbers or symbols in a second bet, from among 6 numbers, the placement of additional bets according to the neighborhood rules described here is also possible.

### Conclusion:

Thus, the Method for Implementing Additional Bets in a Lottery-Style Game is characterized by novel functional features and therefore merits the legal protection sought.

## Claims

1. **METHOD FOR IMPLEMENTING ADDITIONAL BETS IN A LOTTERY-TYPE GAME** is **characterized by** the fact that it individually processes additional bets from a single game, taking into account the numbers not selected by the bettor.

2. **METHOD FOR IMPLEMENTING ADDITIONAL BETS IN A LOTTERY-TYPE GAME** according to claim 1 is **characterized by** the fact that it comprises the following essential sequential steps:
- in step (1), the bettor places the base bet;
- in step (2), it is determined whether additional bets exist;
- in step (3), the numbers Z that will be part of the additional bets are selected from among the numbers chosen by the bettor, taking into account the rules of lateral, vertical, and total adjacency;
- in step (4), the data on the numbers drawn in the base game are processed;
- in step (6), the additional bets for all games are verified by comparing the numbers selected in step (3);
- in step (7), the winning combinations are selected based on the lateral neighborhood rule and/or the total neighborhood rule.

3. **METHOD FOR IMPLEMENTING ADDITIONAL BETS IN A LOTTERY-TYPE GAME** according to claim 2 is **characterized in that** step (5) is optional and provides for the activation of the additional bets if the "on/off number" has been drawn.

4. **METHOD FOR IMPLEMENTING ADDITIONAL BETS IN A LOTTERY-TYPE GAME** according to claim 2 is **characterized by** the fact that the lateral adjacency rule requires that all or some of the selected numbers be lateral neighbors of the numbers drawn in the base game, considering their numerical sequence.

5. **METHOD FOR IMPLEMENTING ADDITIONAL BETS IN A LOTTERY-TYPE GAME** according to claim 2 is **characterized by** the fact that the vertical adjacency rule requires that all or some of the selected numbers must be direct neighbors of the numbers drawn in the base game, considering the position of the numbers on the base game's betting slip, below and above the drawn number.

6. **METHOD FOR IMPLEMENTING ADDITIONAL BETS IN A LOTTERY-TYPE GAME** according to claim 2 is **characterized by** the fact that the total neighborhood rule requires that all or some of the selected numbers must be total neighbors of the numbers drawn in the base game, considering the position of the numbers on the base game's betting slip in all directions.
